# EUROPEAN PATENT SPECIFICATION

(11) **EP 2 285 553 B1**
(45) Date of publication and mention of the grant of the patent: **19.12.2012**
(21) Application number: 09746796.3
(22) Date of filing: 14.05.2009
(51) Int. Cl.: B29D 99/00, B29C 70/34, B29C 70/84, B29C 65/00, F03D 1/06, B29C 69/00, B29L 31/08, B29L 22/00, B29K 63/00, B29K 105/06, B29K 105/04, B29K 309/08

(54) **A METHOD OF MANUFACTURING A TURBINE BLADE HALF AND A METHOD OF MANUFACTURING A TURBINE BLADE**
VERFAHREN ZUR HERSTELLUNG EINER TURBINENSCHAUFELHÄLFTE UND VERFAHREN ZUR HERSTELLUNG EINER TURBINENSCHAUFEL
PROCÉDÉ DE FABRICATION D'UNE MOITIÉ D'AUBE DE TURBINE ET PROCÉDÉ DE FABRICATION D'UNE AUBE DE TURBINE

(30) Priority: 16.05.2008 NL 1035427; 25.08.2008 NL 1035861
(43) Date of publication of application: 23.02.2011
(73) Proprietor: XEMC Darwind B.V., 1217 JC Hilversum (NL)
(72) Inventor: WANSINK, Gerrit, Jan, NL-7161 GG Neede (NL)
(74) Representative: Altenburg, Bernardus Stephanus Franciscus
(86) International application number: PCT/NL2009/000114
(87) International publication number: WO 2009/139619

(56) References cited:
- EP-A- 1 310 351
- EP-A- 1 695 813
- EP-A- 1 990 178
- WO-A-2008/104174
- WO-A-2009/059604
- US-A1- 2003 019 567
- US-A1- 2006 049 552

## Description

The present invention relates to a method of manufacturing a turbine blade half by resin infusion moulding.

In recent years the development of mass-produced wind turbines has moved towards making them larger and larger, both in output and in size. This process calls for better and more cost-efficient components and manufacturing methods, and which particular holds true for wind turbine blades, the manufacture of which is time-consuming. Wind turbine blades known in the art are typically made of fibreglass reinforced by metal, wood or carbon fibres. The blades are typically manufactured by moulding and curing two blade halves in two independent moulds. Subsequently, the surface areas of the blade halves to be connected are provided with an adhesive (epoxy-resin) and the halves are placed on top of each other and connected to each other, for example using the method of EP1695813. Typically a wind turbine blade contains a strengthening member, such as a spar. Such strengthening members both increase the strength and help maintain a proper aerodynamic shape of the wind turbine blade.

A problem with the manufacture of turbine blades is that it is time-consuming and costly. For example, the moulds for a pair of wind turbine blade halves with a length of 55 m may cost €1 M. This contributes significantly to the cost if production of a turbine blade is slow.

Hence, the objective of the present invention is to provide a method of producing a turbine blade half in less time.

To this end, the invention provides a method of producing a turbine blade half using resin infusion moulding according to claim 1.

Thus the present invention integrates the step of curing the turbine blade shell and the step of attaching the strengthening member to the turbine blade shell in a single step. In the present application, the term "turbine blade", or blade for short, includes a section of a turbine blade, such as of a stall-controlled turbine blade. The resin used for the method is conveniently a resin conventionally used for the manufacture of wind turbine blades using Resin Injection Moulding (RIM). A typical resin for RIM is epoxy resin that is cured using heat, for example at 75°C. Similarly, the fibre mats are preferably glass-fibre mats. If one were to wrap a rope around the cured resin connecting the strengthening element to the turbine blade shell, in general at least 40%, preferably at least 60% and more preferably at least 80% of the surface area enclosed by the rope is cured resin not comprising foam. In general, while under reduced pressure, the part of the strengthening member closest to the fibre mats will be at a distance of less then 3 mm, such as about 2 mm from the fibre mats. Preferably the term "over" means "on top of"

According to the invention, the strengthening member is a fibre-reinforced member comprising cured resin.

This results in a turbine blade half that is light and also is built up of components that behave thermally similar to a large extent (expansion/shrinking due to temperature). The resin is preferably of the same type, i.e. involving the same type of chemical groups involved in the curing reaction. This increases the bonding of the shell to the strengthening member. Conveniently, the cured resin is the same as used for the turbine blade half.

According to a preferred embodiment, the fibre-reinforced member comprises a base, the fibre-reinforced member being cured resin while a surface-area increasing liner was present against the base, and the method comprising the step of removing the liner before placing the strengthening member over the fibre mats in the mould.

According to a preferred embodiment, the strengthening member comprises an elongated base, a longitudinal wall extending from said base, and a flange extending from said wall at an edge of said wall opposite to where the wall extends from the base.

Such a flange may, and will, be used to join it to a corresponding flange of a second turbine blade half to form a turbine blade. It increases the surface area over which the strengthening members of both halves are jointed, and thus the strength. A flange substantially parallel to the base facilitates the application of curable resin.

More preferably, a strengthening member is used having
- a elongated base,
- two longitudinal walls extending from said elongated base at opposite edges of said elongated base,
wherein each longitudinal wall has a flange extending from a respective wall, the flanges extending away from each other.

Thus a very simple yet strong and stiff turbine blade half can be provided.

According to a preferred embodiment, the turbine blade shell has a leading edge and a trailing edge, and the flanges have a flange area facing away from the base, said flange areas being in a plane defined by the leading edge and the trailing edge.

The flanges will be connected to opposite flanges of another turbine blade half. This allows for the manufacture of a turbine blade having increased strength, because during use subjected to wind, the shear load at the joint is at a minimum.

According to a preferred embodiment, the strengthening member is attached to the sealing film with double-sided sealant layer.

This is a very convenient way to achieve a satisfactory seal to perform the introduction of resin under reduced pressure, which pressure is typically in the order of 2% of atmospheric pressure. To work in the most practical way, it is the strengthening member that is provided with double-sided sealant layer, so the person manufacturing the turbine blade half only has to handle with the sealing film. A sealant layer is a special type of double-sided adhesive tape that is not porous and for that reason capable of maintaining the vacuum.

The present invention also relates to a method of manufacturing a wind turbine blade according to claim 7.

The periphery of the second turbine blade half is, at least as far as the leading edge and trailing edge are concerned, a mirror image of the first turbine blade half, i.e. it is congruent (of the same size and shape). The second turbine blade half is preferably also manufactured using the method of producing a turbine blade half according to the invention.

According to an important embodiment, each turbine blade half comprises a strengthening member having a flange, and the flanges of opposite turbine blade halves are connected.

This results in a very strong wind turbine blade.

Generally, the halves are connected using a curable resin.

This curable resin is preferably the same as used to manufacture the turbine blade halves, except that it will contain a filler to increase its viscosity. In addition or alternatively, it may have a higher molecular weight.

All preferred embodiments discussed for the method of manufacturing a turbine blade half are equally applicable to the method of manufacturing the turbine blade and the covered by the present application, but not further repeated for the sake of conciseness only.

The present invention will now be illustrated with reference to the accompanying drawing, where
fig. 1a-d shows, in cross-sectional views, steps in the manufacture of a turbine blade half;
fig. 2 shows a top view of the blade of fig. 1; and
fig. 3 shows a step in the manufacture of a turbine blade.

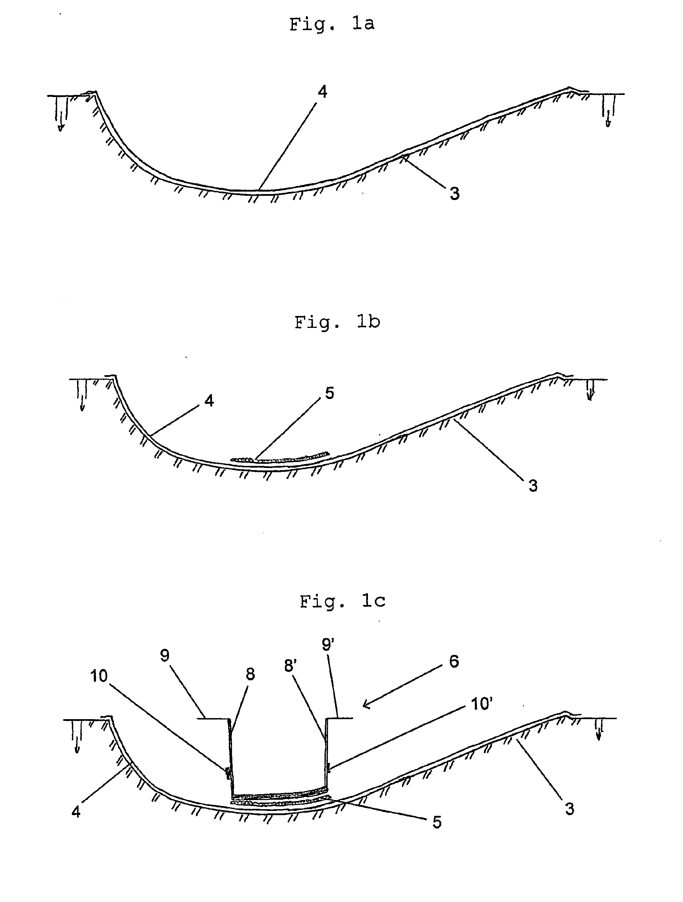

Now reference is made to fig. 1a-d to detail the method of manufacturing a wind turbine blade half of fibreglass reinforced epoxy. The technique of producing turbine blade halves of fibreglass reinforced epoxy is very well known in the art, for which reason the description will focus on the way in which the method according to the present invention differs from the known method.

Fig. la shows a mould 3 for a wind turbine blade shell. The mould 3 is provided with fibreglass mats 4. Other types of mats may also be used, such as mats made of super fibres. On top of the fibreglass mats a further mat 5 (fig. 1b), also known as an infusion mesh having a more open structure than the fibreglass mats 4 is placed. This further mat 5 may or may not be made of a reinforcing material such as fibreglass, carbon fibre, Dyneema™ etc.

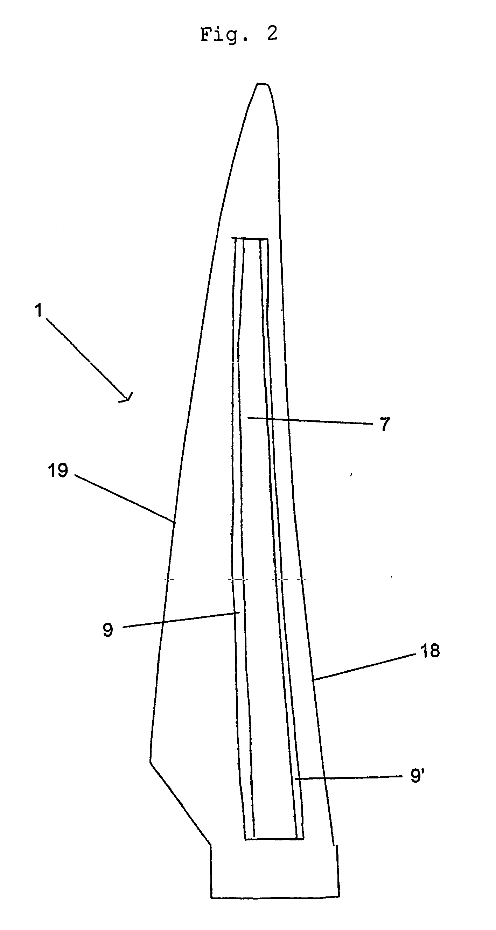

A U-shaped beam 6 having an elongated base 7 (fig. 2), two side walls 8, 8' extending over the length of the base 7, and flanges 9, 9', is placed on top of the further mat 5. The further mat 5 will help to ensure that epoxy resin will reach every part of the fibreglass mats 4, even if it is below the U-shaped beam 6. The U-shaped beam 6 is a strengthening member, and will provide enhanced structural strength to the finished turbine blade 123 and will help to maintain its aerodynamic shape. The U-shaped beam 6 is made of fibreglass mats and epoxy resin, as is known in the art. The epoxy resin may have been cured in contact with a textured peel ply, such as a monofilament nylon peel ply being present at the side of the base opposite to the sidewalls. This peel ply (not shown) is removed before the U-shaped beam 6 is placed on top of the further mat 5, providing a rough surface of increased surface area to increase the bond strength between the U-shaped beam 6 and the epoxy resin later in the process. By removing the peel ply right before placing the U-shaped beam 6 on top of the further mat 5, the rough surface area is also free of contaminants (such as dust, grease etc.).

The U-shaped beam 6 is provided with double-sided sealant layers 10, 10' before it is placed on top of the further mat 5. The sealant layers 10, 10' are suitably non-vulcanized butyl rubber. It is sold as a layer of non-vulcanized butyl rubber between two release liners.

In general, the shell of a turbine blade half 1 is a composite material, usually a sandwich of a layer of fibre mat-reinforced cured resin, a foam layer 13 and another layer of fibre mat-reinforced cured resin. However, for the strongest wind turbine blades 123, it is essential that the strengthening member 6 is in a direct and ample connection with the resin infused in the fibre mats 4 closest to the mould 3 over a large effective cross-sectional area of resin (cross-sectional area parallel to the shell 11). In general, it is not desirable to have the foam layer 13 extending below the strengthening element. If sufficient surface area below the base 7 is cured resin, this could be acceptable but still it is not recommended.

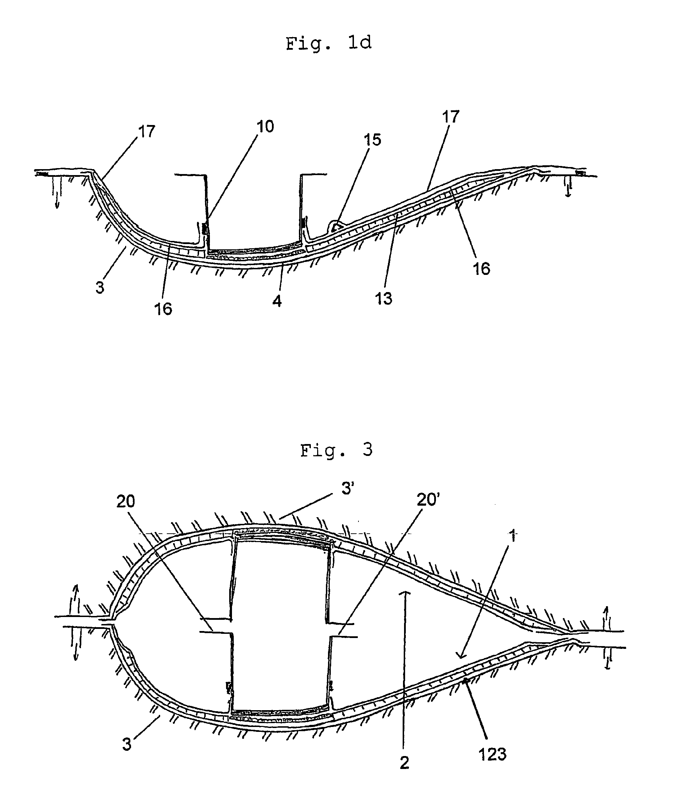

To facilitate evacuation of air and the introduction of epoxy resin, an Ω-profile 15 is placed with its open side onto the fibreglass mats (Fig. 1d), said Ω-profile 15 acting as a channel for transport and distribution of curable resin. If a foam layer 13 is used, it contains through-holes (not shown) to allow curable resin to pass to the fibre mats 4 closest to the mould 3. The foam 13 itself will be a non-porous foam, however, to achieve optimum strength.

Subsequently the fibreglass mats 4 - or the sandwich of fibreglass mats 4, the foam layer 13 and another layer of fibreglass mats 16 - and the Ω-profile are covered with a disposable plastic film 17. The plastic film 17 is sealed against the U-shaped beam 6 using the double-sided sealant layers 10, 10'. Using a vacuum pump (not shown) air is removed (arrows) from under the plastic film 17 and curable epoxy resin is introduced while vacuum is maintained. The epoxy resin penetrates all the voids below the plastic film 17, entering the fibreglass mats 4 and the further mat 5. Subsequently the epoxy resin is cured at an elevated temperature (e.g. 75°C). This not only results in the turbine blade shell 11 being cured, but also the turbine blade shell 11 being bonded to the U-shaped beam 6 at the same time. This saves valuable time, because no longer it is required to cool the shell, apply epoxy resin and a U-shaped beam, and heat the assembly to cure the epoxy resin.

After curing the curable resin, by heating the mould 3, the plastic film 17 and the Ω-profile 15 are removed.

Fig. 2 shows a top view of a turbine blade half 1, with the U-shaped beam 6 extending over a major part of the length of the turbine blade half 1.

Producing a turbine blade 123 may simply be achieved by manufacturing two turbine blade halves 1, 2 using the method according to the invention described above, applying filler-containing epoxy resin at the surfaces of the turbine blade halves 1 that will be in contact, in particular the flanges 9, 9' of the U-shaped beam 6, the leading edge 18 and the trailing edge 19 of at least one of the two turbine blade halves 1, 2, followed by placing the turbine blade halves 1, 2 against each other and curing the epoxy resin. By heating the moulds 3, 3' the epoxy resin is cured..

As can be seen in fig. 3, the flanges 9, 9' have surfaces in a plane defined by the leading and trailing edges 18, 19. The flanges 9, 9' themselves provide for a larger surface area (bonding areas 20, 20') to bond the turbine blade halves 1, 2 together. The bond itself is at a location in the turbine blade 123 where forces are on average smaller than elsewhere in the U-shaped beam 6, resulting in a stronger wind turbine blade 123.

## Claims

1. A method of producing a turbine blade half (1, 2) by resin infusion moulding, said method comprising the steps of
- providing a mould (3) for a turbine blade shell (11) with fibre mats (4),
- placing a strengthening member (6) over the fibre mats (4) in the mould (3);
- placing an air-impermeable sealing film (17) over the fibre mats (4) and against the strengthening member (6);
- introducing a curable resin in the fibre mats (4) under reduced pressure, including in the area below the strengthening member (6); and
- curing the resin to form a turbine blade half (1, 2), said turbine blade half (1, 2) comprising a turbine blade shell (11) attached to the strengthening member (6) by the cured resin;
wherein the strengthening member is a fibre-reinforced member comprising cured resin.

2. The method according to claim 1, wherein the fibre-reinforced member comprises a base (7), the fibre-reinforced member being cured resin while a surface-area increasing liner was present against the base, and the method comprising the step of removing the liner before placing the strengthening member over the fibre mats (4) in the mould (3).

3. The method according to any of the preceding claims, wherein the strengthening member (6) comprises an elongated base (7), a longitudinal wall (8, 8') extending from said base (7), and a flange (9, 9') extending from said wall (8, 8') at an edge of said wall (8, 8') opposite to where the wall (8, 8') extends from the base (7).

4. The method according to claim 3, wherein a strengthening member (6) is used having
- an elongated base (7),
- two longitudinal walls (8, 8') extending from said elongated base (7) at opposite edges of said elongated base (7), wherein each longitudinal wall (8, 8') has a flange (9, 9') extending from a respective wall (8, 8'), the flanges (9, 9') extending away from each other.

5. The method according to claim 4, wherein the turbine blade shell (11) has a leading edge (18) and a trailing edge (19), and the flanges (9, 9') have a flange area (20, 20') facing away from the base (7), said flange areas (20, 20') being in a plane defined by the leading edge (18) and the trailing edge (19).

6. The method according to any of the preceding claims, wherein the strengthening member (6) is attached to the sealing film (17) with double-sided sealant layer (10, 10').

7. A method of manufacturing a wind turbine blade (123), wherein a turbine blade half (1)
* is obtained by
- providing a mould for a turbine blade shell with fibre mats,
- placing a strengthening member comprising a base, a wall extending from said base, and a flange extending from said wall at an edge of said wall opposite to where the wall extends from said base over the fibre mats in the mould;
- placing an air-impermeable sealing film over the fibre mats and against the strengthening member;
- introducing a curable resin in the fibre mats under reduced pressure, including in the area below the strengthening member; and
- curing the resin to form a turbine blade half, said turbine blade half comprising a turbine blade shell attached to the strengthening member by the cured resin
* and having a leading edge and a trailing edge is connected to a second turbine blade half (2) such that the leading edges of both halves and the trailing edges of said halves are connected and the flange of the strengthening member of the first turbine blade half is connected to the second turbine blade half; wherein the strengthening member is a fibre-reinforced member comprising cured resin.

8. The method according to claim 7, wherein each turbine blade half comprises a strengthening member having a flange, and the flanges of opposite turbine blade halves are connected.

9. The method according to claim 8, wherein the halves are connected using a curable resin.

## Patentansprüche

1. Verfahren zur Herstellung einer Turbinenschaufelhälftc (1, 2) durch Harz-Infusion, umfassend die Verfahrensschritte:
- Bereitstellen eines Formkörpers (3) für eine Turbinenschaufelhülle (11) durch Fasermatten (4);
- Platzieren eines Verstärkungsglieds (6) oberhalb der Fasermatten (4) in der Form (3);
- Platzieren eines luftundurchlässigen Versiegelungsfilms (17) über den Fasermatten (4) und an das Verstärkungsglicd (6);
- Zuführen eines härtbaren Harzes in die Fascrmatten (4) unter reduziertem Druck, einschließlich des Bereiches unter dem Verstärkungsglied (6) und
- Härten des Harzes, um eine Turbinenschaufelhälfte (1, 2) herzustellen, wobei die Turbinenschaufelhälfte (1, 2) eine Turbinenschaufelhülle (11) umfasst, die mit dem Verstärkungsglied (6) durch das gehärtete Harz verbunden ist,
wobei,
das Verstärkungsglied ein faserverstärktes Glied ist, welches gehärtetes Harz enthält.

2. Verfahren nach Anspruch 1, **dadurch gekennzeichnet, dass** das faserverstärkte Glied eine Basis (7) umfasst, dass das faserverstärkte Glied aus gehärtetem Harz besteht, wobei eine oberflächenvergrößernde Auskleidung an der Basis anlag und dass das Verfahren den Schritt umfasst, dass die Auskleidung entfernt wird, bevor das Verstärkungsglied über den Fasermatten (4) in der Form (3) platziert wird.

3. Verfahren nach einem der vorhergehenden Ansprüche, **dadurch gekennzeichnet, dass** das Verstärkungsglied (6) eine verlängerte Basis (7), eine in Längsrichtung verlaufende Wand (8, 8'), die von dieser Basis (7) ausgeht, und einen Flansch (9, 9'), welcher von einer Kante dieser Wand (8, 8') ausgeht, und der der Basis (7) gegenüberliegend an der Wand (8, 8') angeordnet ist, besitzt.

4. Verfahren nach Anspruch 3, **dadurch gekennzeichnet, dass** das verwendete Verstärkungsglied (6)
- eine verlängerte Basis (7)
- zwei in Längsrichtung verlaufende Wände (8, 8'), die von der verlängerten Basis (7) an gegenüberliegenden Kanten der verlängerten Basis (7) ausgehen,
aufweist, wobei jeder der in Längsrichtung verlaufenden Wände (8, 8') einen Flansch (9, 9') aufweist, der von einer entsprechenden Wand (8, 8') ausgeht, wobei die Flansche (9, 9') voneinander weg weisen.

5. Verfahren nach Anspruch 4, **dadurch gekennzeichnet, dass** die Turbinenschaufelhülle (11) eine Eintrittskante (18) und eine Austrittskante (19) aufweist und dass die Flansche (9, 9') einen Flanschbereich (20, 20') aufweisen, der von der Basis (7) weg weist, wobei die Flanschbereiche (20, 20') in einer Ebene angeordnet sind, die von der Eintrittskante (18) und der Austrittskante (19) definiert wird.

6. Verfahren nach einem der vorhergehenden Ansprüche, **dadurch gekennzeichnet, dass** das Verstärkungsglied (6) mit dem Versiegelungsfilm (17) über eine doppelseitige Dichtschicht (10, 10`) verbunden ist.

7. Verfahren zur Herstellung einer Turbinenschaufel (123), wobei eine Turbinenschaufelhälfte (1) erhalten wird durch
- Bereitstellen eines Formkörpers für eine Turbinenschaufelhülle durch Fasermatte;
- Platzieren eines Verstärkungsglieds, umfassend eine Basis, eine Wand, die von dieser Basis ausgeht, und einen Flansch, welcher von einer Kante dieser Wand ausgeht, und der der Basis gegenüberliegend an der Wand angeordnet ist, über den Fasermatten in dem Formkörper;
- Platzieren eines luftundurchlässigen Versiegelungsfilms über den Fasermatten und an das Verstärkungsglied;
- Zuführen eines härtbaren Harzes in die Fasermatten unter reduziertem Druck, einschließlich des Bereiches unter dem Verstärkungsglied und
- Härten des Harzes, um eine Turbinenschaufelhälfte herzustellen, wobei die Turbinenschaufelhälfte eine Turbinenschaufelhülle umfasst, die mit dem Verstärkungsglied durch das gehärtete Harz verbunden ist und wobei die Turbinenschaufelhälfte eine Eintrittskante und eine Austrittskante aufweist
wobei dic Turbinenschaufelhälfte (1) so mit einer zweiten Turbinenschaufelhälfte (2) verbunden wird, dass die Eintrittskanten beider Hälften und die Austrittskanten beider Hälften miteinander verbunden sind und der Flansch des Verstärkungsgliedes der ersten Turbinenschaufelhälfte mit der zweiten Turbinenschaufelhälfte verbunden ist;
wobei das Verstärkungsglied ein faserverstärktes Glied ist, welches gehärtetes Harz enthält.

8. Verfahren nach Anspruch 7, **dadurch gekennzeichnet, dass** jede Turbinenschaufelhälfte ein Verstärkungsglied umfasst, welches einen Flansch aufweist, wobei die Flansche der entgegengesetzten Turbinenschaufelhälften miteinander verbunden sind.

9. Verfahren nach Anspruch 8, **dadurch gekennzeichnet, dass** die Turbinenschaufelhälften durch ein härtbares Harz miteinander verbunden sind.

## Revendications

1. Procédé pour produire une moitié d'aube de turbine (1, 2) par moulage par infusion de résine, ledit procédé comprenant les étapes consistant à
- prévoir un moule (3) pour une coque d'aube de turbine (11) avec des matelas de fibres (4),
- placer un élément de renfort (6) sur le matelas de fibres (4) dans le moule (3) ;
- placer un film d'étanchéité imperméable à l'air (17) sur les matelas de fibres (4) et contre l'élément de renfort (6) ;
- introduire une résine durcissable dans les matelas de fibres (4) sous pression réduite, inclus dans la zone située au-dessous de l'élément de renfort (6) ; et
- faire durcir la résine afin de former une moitié d'aube de turbine (1, 2), ladite moitié d'aube de turbine (1, 2) comprenant une coque d'aube de turbine (11) fixée à l'élément de renfort (6) par la résine durcie ;
dans lequel l'élément de renfort est un élément renforcé en fibres comprenant la résine durcie.

2. Procédé selon la revendication 1, dans lequel l'élément renforcé en fibres comprend une base (7), l'élément renforcé en fibres étant de la résine durcie alors qu'un revêtement d'accroissement de surface est présent contre la base, et le procédé comprenant l'étape consistant à retirer le revêtement avant de placer l'élément de renfort sur les matelas de fibres (4) dans le moule (3).

3. Procédé selon l'une quelconque des revendications précédentes, dans lequel l'élément de renfort (6) comprend une base allongée (7), une paroi longitudinale (8, 8') s'étendant à partir de ladite base (7), et un rebord (9, 9') s'étendant à partir de ladite paroi (8, 8') au niveau d'un bord de ladite paroi (8, 8') opposé à l'endroit où la paroi (8, 8') s'étend à partir de la base (7).

4. Procédé selon la revendication 3, dans lequel on utilise un élément de renfort (6) ayant
- une base allongée (7),
- deux parois longitudinales (8, 8') s'étendant à partir de ladite base allongée (7) au niveau des bords opposés de ladite base allongée (7),
dans lequel chaque paroi longitudinale (8, 8') a un rebord (9, 9') s'étendant à partir d'une paroi (8, 8') respective, les rebords (9, 9') s'étendant à distance l'un de l'autre.

5. Procédé selon la revendication 4, dans lequel la coque d'aube de turbine (11) a un bord d'attaque (18) et un bord de fuite (19), et les rebords (9, 9') ayant une zone de rebord (20, 20') à distance de la base (7), lesdites zones de rebord (20, 20') étant dans un plan défini par le bord d'attaque (18) et le bord de fuite (19).

6. Procédé selon l'une quelconque des revendications précédentes, dans lequel l'élément de renfort (6) est fixé au film d'étanchéité (17) avec une couche d'agent d'étanchéité double face (10, 10').

7. Procédé pour fabriquer une aube d'éolienne (123), dans lequel une demi-aube de turbine (1),
est obtenue avec les étapes consistant à
- prévoir un moule pour une coque d'aube de turbine avec des matelas de fibres,
- placer un élément de renfort comprenant une base, une paroi s'étendant à partir de ladite base, et un rebord s'étendant à partir de ladite paroi au niveau d'un bord de ladite paroi opposé à l'endroit où la paroi s'étend à partir de ladite base sur les matelas de fibres dans le moule ;
- placer un film d'étanchéité imperméable à l'air sur les matelas de fibres et contre l'élément de renfort ;
- introduire une résine durcissable dans les matelas de fibres sous pression réduite, comprise dans la zone située au-dessous de l'élément de renfort ; et
- faire durcir la résine afin de former une moitié d'aube de turbine, ladite moitié d'aube de turbine comprenant une coque d'aube ce turbine fixée à l'élément de renfort par la résine durcie,
et ayant un bord d'attaque et un bord de fuite,
est raccordée à une seconde moitié d'aube de turbine (2) de sorte que les bords d'attaque des deux moitiés et les bords de fuite des deux moitiés sont raccordés et le rebord de l'élément de renfort de la première moitié d'aube de turbine est raccordé à la seconde moitié d'aube de turbine ;
dans lequel l'élément de renfort est un élément renforcé en fibres comprenant la résine durcie.

8. Procédé selon la revendication 7, dans lequel chaque moitié d'aube de turbine comprend un élément de renfort ayant an rebord, et les rebords des moitiés d'aube de turbine opposées sont raccordés.

9. Procédé selon la revendication 8, dans lequel les moitiés sont raccordées en utilisant une résine durcissable.
